# EUROPEAN PATENT APPLICATION

(11) **EP 3 340 144 A1**
(43) Date of publication of application: **27.06.2018**
(21) Application number: 16206453.9
(22) Date of filing: 22.12.2016
(51) Int. Cl.: G06Q 20/32, G06Q 20/34, G06Q 20/36, G06Q 20/20

(54) **ELECTRONIC PAYMENT DEVICE TRANSACTIONS**

(71) Applicant: Mastercard International Incorporated, Purchase NY 10577 (US)
(72) Inventor: SMETS, Patrik, 2560 Nijlen (BE); CATELAND, Axel Emile Jean Charles, Scarsdale, NY New York 10583 (US); FERREIRA DA SILVA, Luis Filipe de Almeida, 1150 Brussels (BE)
(74) Representative: Lawrence, Richard Anthony

(57) **Abstract**

Performance and processing of a contactless transaction at an electronic payment device with a terminal of a transaction system is described. In the device, an account data set is prepared for use in contactless transactions. This account data set comprises user account details to identify a user account with an issuer for the user account and an indicator indicating that the contactless transaction is a customer not present (CNP) transaction. A contactless transaction is performed with the terminal using the contactless transaction account data set. In processing, transaction details of a contactless transaction are received and reviewed to determine whether the contactless transaction is indicated to be a customer present or a customer not present transaction. If the contactless transaction is indicated to be a customer present transaction, an issuing bank for the electronic payment device is notified. If the contactless transaction is indicated to be a customer not present transaction, the contactless transaction is processed as a customer not present transaction. Suitable apparatus is also described.

## Description

### TECHNICAL FIELD

The present disclosure relates to electronic payment devices, and more specifically to contactless electronic payment devices, and to methods of operation of such devices and of processing of resulting transactions.

### BACKGROUND

Contactless payment devices are used to carry out financial transactions using a transaction infrastructure that supports contactless payments, typically according to the ISO/IEC 14443 standard. Such payment devices may be chip and pin cards that are also provided with circuitry to allow them to act as an inductively powered NFC tag, possibly with additional processing logic. Another type of contactless payment device is a cellular telephone handset (such as a smart phone) running an application to emulate a physical card or to transact with a virtual card. Such a device may be an active (directly powered) NFC device rather than a passive one (which needs to be externally powered, typically inductively).

Transactions are made from a customer account with an issuing bank (the issuer), who typically provides the payment device with the support of a transaction infrastructure provider. The transaction will normally be made with a merchant who has a merchant account with an acquiring bank (the acquirer).

Transactions may be made in a number of different ways. A typical transaction involves paying for goods or services from a main merchant. Transaction payments fall into two categories; Card Present (CP) transactions and Card Not Present (CNP) transactions. At present, both contactless and contact (normal chip and pin) transactions are CP transactions, whereas remote transactions are CNP transactions.

A CNP transaction is carried out when the customer is paying for goods at a remote location to the merchant. An exemplary CNP transaction involves a remote computer, such as a buyer's personal computer, being used to make a transaction over the public internet. In order to carry out the transaction, the buyer enters their account details into the computer when paying for the goods or services. The transaction is processed as a CNP transaction. Another potential CNP situation is when the customer is transacting with the merchant over the telephone. In either case, the merchant contacts the issuer where the account details are compared to an account stored at the issuer or by a service operating on behalf of the issuer. If the account details match up, then the transaction is authorised. If the account details do not match up then the transaction is declined. Additional details (such as a password established for use in internet-based transactions) may be used for such CNP processes.

In a physical store, a point of sale terminal will typically be located on the merchant's premises - a terminal is a device which provides access to a transaction infrastructure allowing payments to be made between accounts. Point-of-sale devices held on the merchant's premises are configured to process CP transactions in response to reading account information on a payment card. The account information is stored on a secure element such as an electronically accessible chip in a so-called 'chip and pin' enabled card (it may also be on a magnetic stripe). Some payment cards now include an inductive NFC or RFID tag so that account information may be read from the card contactlessly. The account information is specific to the card holder and includes the account number and other card details. The card also has a cryptographic key stored on it which has been added by the issuer of the account. The account information is also loaded onto the card by the account issuer.

In a CP transaction the point of sale terminal communicates with the marchant's own bank (the acquirer) and then through the transaction infrastructure with the card issuer's bank where the card holder's account is held. A complementary cryptographic key is stored at the issuer's bank. The complementary cryptographic key is arranged to check cryptographic material generated by the card. In online authorisation of a transaction by the issuer if this check is passed then the transaction proceeds to the next stage of the authorisation process. If it doesn't then the transaction is declined. In the case of a contactless transaction, online authorisation may not always be used - however, subsequent action prevent the card from making future transactions.

In existing CP transaction arrangements, payment devices need to be able to generate cryptographic material that the issuer can use in the authentication process when processing the transaction as a CP transaction. As such, the issuer must always be involved when setting up the initial contactless payment account in order to assign the cryptographic key to the card.

### SUMMARY OF THE DISCLOSURE

In a first aspect, the disclosure provides a method of performing a contactless transaction at an electronic payment device with a terminal of a transaction system, the method comprising: preparing an account data set for use in contactless transactions, wherein the account data set comprises user account details to associate a user account with an issuer of the user accountand an indicator indicating that the contactless transaction is a card not present (CNP) transaction; and performing the contactless transaction with the terminal using the contactless transaction account data set.

Using this approach, an electronic payment device can be established to perform contactless transactions without explicit issuer involvement in the set up process. As will be discussed below, this may be particularly advantageous in certain contexts, especially where the electronic payment device is to be adapted for more than one purpose.

In at least some embodiments, the electronic payment device is adapted to perform a contactless transaction according to EMV protocols, and wherein the indicator is comprised in the application interchange profile. The contactless transaction account data set may comprise one or more of the following: an account number, a card number, an expiry date, a valid from date, an issue number, a card type and a card verification value (CVV). The contactless transaction account data set may however exclude any cryptographic information shared between the electronic payment device and the issuer to establish a trust relationship between them.

The electronic payment device may be a computing device, or may be a physical token such as a payment card or a key fob.

In a second aspect, the disclosure provides a method of processing a contactless transaction made between an electronic payment device and a terminal of a transaction system, the method comprising: receiving transaction details of a contactless transaction for processing; reviewing the transaction details to determine whether the contactless transaction is indicated to be a card present or a card not present transaction; and if the contactless transaction is indicated to be a card present transaction, notifying an issuing bank for the electronic payment device; and if the contactless transaction is indicated to be a card not present transaction, processing the contactless transaction as a card not present transaction.

This approach provides straightforward downstream processing which allows contactless transactions with an electronic payment device without need for issuer involvement in the device set up. In embodiments, the contactless transaction is performed according to EMV protocols, and wherein the indicator is comprised in the application interchange profile.

In a third aspect, the disclosure provides an electronic payment device adapted to perform a contactless transaction with a terminal of a transaction system using the method of the first aspect above, the electronic payment device comprising a memory containing the account data set and the indicator, and circuitry to establish a local wireless connection to a terminal of a transaction system.

The electronic payment device may be a computing device such as a cellular telecommunications system handset. Alternatively, it may be a physical token such as a payment card or even a key fob.

### BRIEF DESCRIPTION OF THE FIGURES

Embodiments of the disclosure will now be described, by way of example, with reference to the accompanying Figures in which;
Figure 1 shows a transaction network;
Figure 2 shows an electronic payment apparatus including a point of sale terminal (POS) and an electronic payment device according to the present disclosure;
Figure 3 shows the electronic payment device of Figure 2 embodied as a smartphone;
Figure 4 shows the electronic payment device of Figure 2 embodied as a payment card;
Figure 5 shows the reverse of the payment card of Figure 4;
Figure 6 shows a flow diagram of a transaction of the present disclosure;
Figure 7 shows the electronic payment device of Figure 2 embodied as a key fob; and
Figure 8 shows a process of configuration of a payment device according to an embodiment of the disclosure.

### DETAILED DESCRIPTION

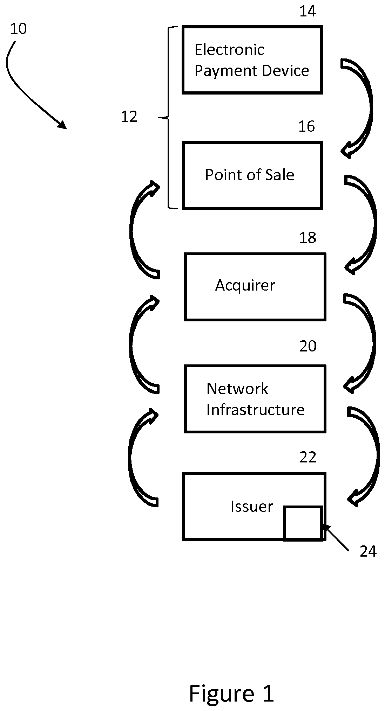

With reference to Figure 1, a financial transaction is carried out over a transaction network 10. The transaction network 10 includes an electronic payment apparatus 12, an acquirer 18, a network 20 and an issuer 22. The transaction network 10 will typically include a transaction processing system arranged intermediate the acquirer and the issuer, together with a switching system to route transactions appropriately. The electronic payment apparatus 12 includes an electronic payment device 14 and a point of sale terminal 16. The electronic payment device 14 is held by an account holder. The point of sale terminal 16 is provided by a merchant on the merchant's premises. The transaction network 10 will typically also provide routing between the electronic payment device 14 and the issuer 22 and the point of sale terminal 16 and the acquirer 18. A point of sale terminal 16 is typically adapted to perform contact and contactless transactions. Contact transactions use a payment card as a payment device, and involve a data exchange using chip and pin or magnetic stripe reading, and typically involve customer verification by entry of a customer PIN into the point of sale terminal 16. In a contactless transaction, information exchange takes place by short range wireless communication (for example using NFC protocols) and there is generally no further customer verification step.

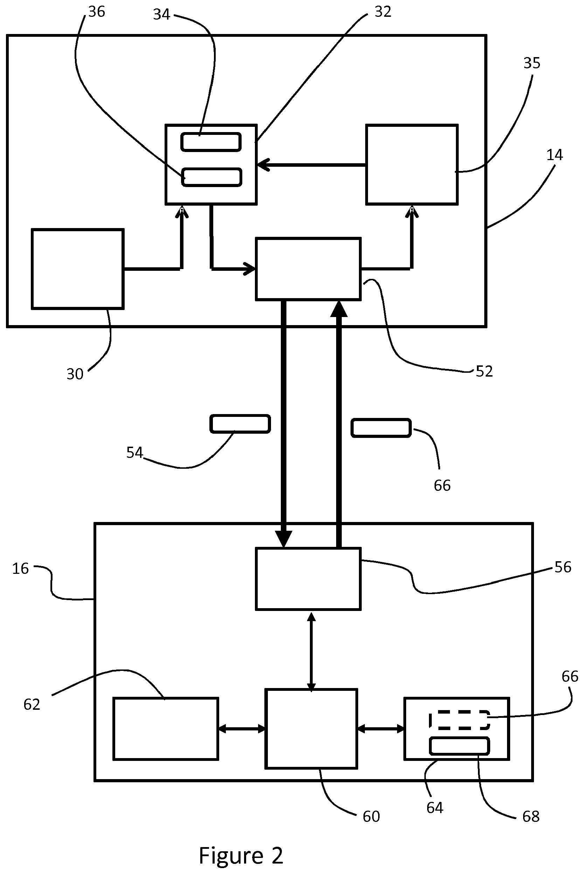

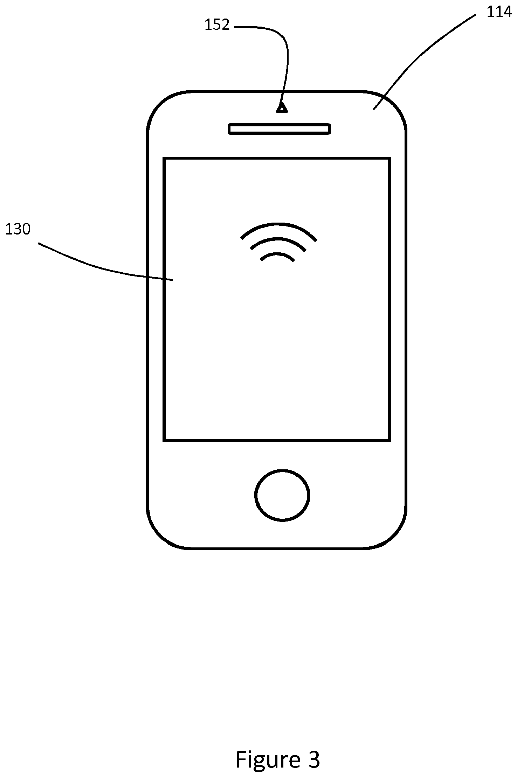

With reference to Figures 2 and 3, the electronic payment device 14 is in the form of a smartphone 114. The smartphone includes a touch screen 130. In this way, the electronic payment device 14 has an input 30. The touch screen 130 has various functions such as acting as a display and also accepting inputs from a user. These inputs may be in the form of text input on a soft key pad. The smartphone 114 has an antenna for communicating across an electromagnetic telecommunication network such as 3G, 4G or the like. The antenna or a separate antenna may also communicate with a WiFi network. These communication media are internet based communication media allowing for data to be uploaded and downloaded to the smartphone 114. The smartphone 114 can thus be connected to a telecommunications server. A software application or 'app', exemplified hereinafter as an electronic wallet or "E-wallet", can be downloaded to the smartphone over an appropriate network. Exemplary payment applications are MasterCard PayPass, Google Wallet and Apple Pay, though as will be discussed below, embodiments of the disclosure may support software applications with more limited functionality.

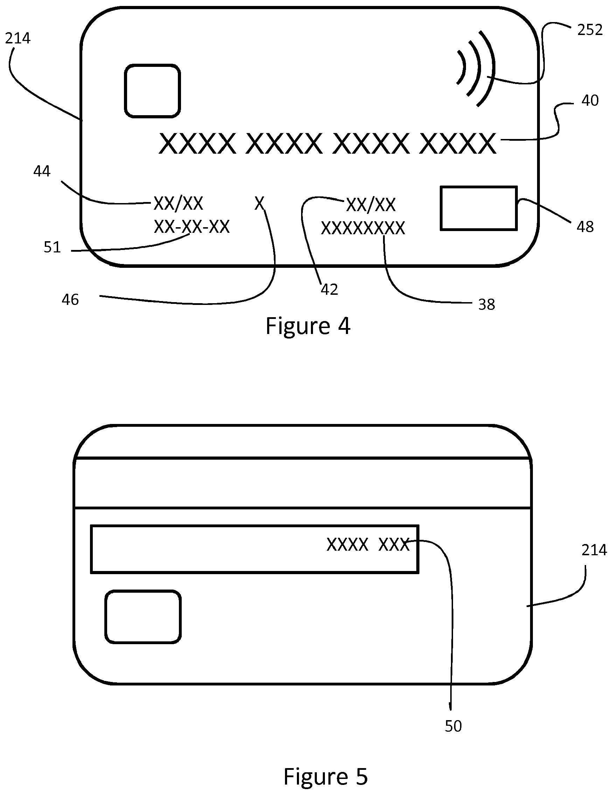

With the E-wallet on the smartphone 114, the smartphone 114 thus has a data storage module 32. The touchscreen is directly connected to the data storage module 32. The data storage module 32 includes an account data store 34 and an identifier 36. The account data store comprises data entered into the E-wallet. The account data store 32 allows for account information to be stored as electronic data on the memory component of the smartphone 114. This account information forms an account data set. Various account data items can be input to the account data store by the touchscreen 130. With brief reference to Figures 4 and 5 these account data items may include an account number 38, a card number 40, a card expiry date 42, a valid from date 44, an issue number 46, a card type 48, a card verification value (CVV) 50, and a sort code 51.

For a conventional contactless transaction, information is present in both the account data store 34 and the issuer to support a trust relationship between the E-wallet and the issuer - this typically requires user involvement in the set up of the E-wallet to establish the trust relationship and share information such that the issuer can verify that a transaction is received from a trusted E-wallet by decryption of data encrypted by the E-wallet. As discussed below, embodiments of the present disclosure allow effective use of an E-wallet on the smartphone 114 even when there has not been issuer involvement in set-up.

The identifier is in the form of electronic data. The identifier is a transaction type identifier. The identifier 36 is coded in accordance with conventional EMV data formats. In particular, the identifier is coded in one embodiment using the application interchange profile (AIP) defined in EMV standards. EMV stands for Europay (RTM) Mastercard (RTM) and Visa (RTM), and EMV provides a global standard for transaction infrastructure operations. The AIP is provided in tag 82 defined by EMV protocols, and is used to indicate the capabilities of a payment device to support specific functions in the application. Data in tag 82 is passed from the payment device to the point of sale device, and then information in this AIP Tag 82 EMV can be passed onwards from the point of sale device for processing elsewhere in the transaction infrastructure. As such, coding the identifier using AIP TAG 82 EMV means that existing points of sale are not affected by implementation of the present disclosure.

The smartphone 114 also includes an antenna 152 for near field wireless communication, for example using NFC protocols to implement the ISO/IEC 14443 standard for contactless payment. In this way, the electronic payment device 14 includes a communication module 52. The NFC antenna may alternatively be replaced by any suitable near field wireless or RF communication antenna (for example, Bluetooth - RFID may also be used though generally in passive devices rather than a smartphone, which will typically be used as an active device as it has an internal battery). A processor of the smartphone 114 is connected to the memory component and the NFC antenna 152. The processor is arranged to configure the data storage module 32 to generate a transaction demand 54 based on the identifier 36 and the account data set stored at the account data store. The processor is also arranged to configure the NFC antenna 152 to transmit the transaction demand 54 to the point of sale terminal 16. The processor is thus a control module 35.

The point of sale terminal 16 includes a NFC aerial and a display for displaying information (not shown). This NFC aerial is part of a transceiver 56 being able to send and receive data. In this case, the transceiver is a NFC transceiver 156. By virtue of the NFC antenna 152 of the electronic payment device 14 and the NFC transceiver of the point of sale terminal 16, the electronic payment device 14 is arranged to communicate with the point of sale terminal 16.

The point of sale terminal 16 also includes a processor 60, a communication port 62 and a memory component 64. The memory component is similar to that of the electronic payment device 14. A query 66 in the form of electronic data is stored on the memory component 64 of the point of sale terminal 16. The processor 60 is arranged to send the query 66 to the smart phone 114 device via the transceiver 56. The processor constantly sends the query 66 so that any electronic payment devices within range of the NFC transceiver 156 receive the query 66.

A transaction module 68 in the form of electronic data is also stored on the memory component 64 of the point of sale terminal 16. When the processor 60 executes the transaction module 68, the point of sale terminal 16 reads the transaction demand 54 and processes the transaction accordingly.

When the transaction is processed by the point of sale terminal 16, transaction details are passed to the acquirer 18. Transaction details may be passed through a transaction infrastructure (not explicitly shown for this step) or through a dedicated path.

The acquirer 18 infrastructure includes a computer having a processor and a memory component. The memory component is a non-volatile component such as a read only memory component (ROM), by way of example, but could also be a re-writable memory component. The merchant's account details are stored as electronic data on the memory component. The point of sale terminal is connected to the computer at the acquirer 18 over a communication medium. Although the communication medium between the acquirer and the point of sale terminal may be a direct connection, it is envisaged that an internet based communication medium governed by established communication protocols is more suitable. The internet based communication medium may include a local area network (LAN) or a wide area network (WAN), and may also be a dial up connection, cable modem or a high speed ISDN line.

The transaction infrastructure 20 connects the computer at the acquirer 18 to a computer at the issuer 22. The network 20 comprises an internet based communication medium but also comprises switches for routing transaction information appropriately and computing resources for processing transaction information. This transaction infrastructure may be the same as that connecting the point of sale terminal 16 to the acquirer 18.

The computer at the issuer 22 is similar in construction to the computer at the acquirer 18. The computer at the issuer 22 has one or more account data sets 24 stored as electronic data on the memory component. The issuer 22 thus has the account data set 24 stored thereon which is associated with the electronic payment device 14. This specific account data set is known as the card holder's account 24. Each transaction relating to a cardholder account stored on the issuers' computer may be processed as either a card present (CP) transaction or a card not present (CNP) transaction. The memory component of the issuers' computer has a transaction program stored thereon which is executed by the computer's processor in order to process the transaction as a card present or card not present transaction. Different rules may be applied for the authorisation of CP and CNP transactions - CP transactions will typically be regarded as more secure as additional user authorisation information may be used in transactions as cryptographic information is included evidencing a trust relationship between the payment device and the issuer, though this approach has hitherto required registration of the user authorisation information with the issuer. CNP transactions may require additional authorisation steps for issuer approval to take place.

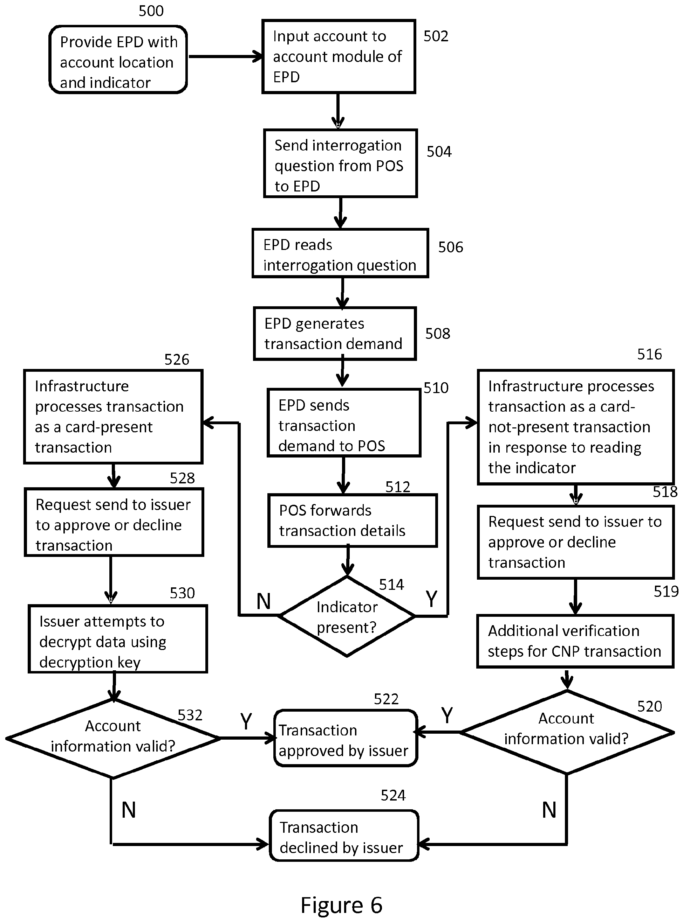

With reference to Figure 6, in operation, the E-wallet is downloaded to the smartphone 114 as an application. In this way the electronic payment device 14 is provided with an account data store and the identifier 36. This occurs at step 500. Once the E-wallet application has been established on the smart phone 114, an account holder is able to input the requested account data items to the requested fields of the E-wallet as per step 502. In particular, the account holder inputs the account number 38, card number 40, expiry date 42, valid from date 44, card type 48, and CVV 50 using the soft key pad on the touchscreen of the smartphone 114 - in other embodiments, it is possible that the information may be read electronically from a physical card into the E-wallet through a contactless connection. The account data set is stored in the account data store on the E-wallet.

When the account holder wishes to pay for an item at the merchant, the account holder approaches the point of sale terminal 16 with the smart phone 114. The point of sale terminal, once the necessary steps have been taken to establish that there is a transaction to be carried out, is constantly emitting the query to any devices in the immediate proximity of the POS terminal as per step 504. The smartphone 114 receives the query 66 and upon reading the query 66 at step 506, configures the data storage module to generate a transaction demand 54 based on the account and identifier as per step 508 - the specifics of this approach depend on the protocol used, but according to EMV payment protocols there will first be an interaction to determine a working combination of application at the payment device and processing kernel at the point of sale device, followed by provision of data from the payment device to the point of sale device to provide necessary account information to complete the transaction (here termed a "transaction demand"). The smartphone 114 sends the transaction demand to the point of sale terminal 16 as step 510. The point of sale terminal 16 processes the transaction demand 54 by reading the received data as per step 512.

The point of sale terminal 16 processes the transaction as a normal contactless payment. The transaction details however contain the identifier to indicate that the transaction is a CNP transaction. The point of sale terminal 16 able to process the transaction demand as a conventional contactless transaction, even though this is conventionally always a CP transaction, as the presence of the identifier will allow different processing options to be taken in the processing infrastructure. While it is possible to take these different processing options (as discussed below) in the point of sale device, it will typically be more advantageous for point of sale device design to be unchanged and for the differences in processing to be handled in the transaction infrastructure.

At step 514, the transaction infrastructure checks to see whether the CNP indicator is present. This enables it to determine whether the transaction should be processed as a conventional CP transaction or as a CNP transaction.

If the indicator is present, the transaction infrastructure processes the transaction as a CNP transaction 516 and routes the transaction to the issuer (or to whichever party handles CNP transactions for the issuer) to approve or decline the transaction 518. This may require the customer to make an additional authentication step 519 of the kind customarily required for CNP transactions (for example "Verified by Visa" or "MasterCard SecureCode" for conventional online transactions). With reference again to Figure 2, some intermediate steps are taken in order to process the transaction from the point of sale terminal to the issuer. The account data set of the transaction demand is compared to the cardholder's account 24. With further reference to Figure 6, the account data set is determined to be valid at step 520.

In the case where the account data set matches that of the cardholder's account 24 the transaction is approved by the issuer as per step 522. With further reference to Figure 1, the issuer pays the acquirer 18 a payment transferred over network 20. This payment is deducted from the cardholder's account 24 at the issuer. Finally, the acquirer 18 contacts the point of sale terminal 16 to display that the transaction has been approved.

In the case where the account data set does not match that associated with the card holder's account 24, the transaction is declined by the issuer at step 524 on Figure 6. No financial transactions are completed between the issuer and the acquirer of Figure 1. Instead, a transaction declined message is transmitted back to the POS. Accordingly, the point of sale terminal 16 may be configured to display a transaction decline notification.

If the transaction is identified as a conventional CP contactless transaction, the transaction infrastructure determines 526 that the transaction should be processed as a CP transaction and the steps that follow are conventional. The transaction request is forwarded 528 to the issuer to be accepted or declined, the issuer uses 530 its decryption key to authenticate the encrypted authentication data provided in the transaction information, and the transaction is approved or rejected as before depending on the assessment 532 of the validity of the account information.

Various alternatives to the electronic payment apparatus or the process to proceed with the transaction are envisaged without falling outside the scope of the claims. In particular, the payment device need not be a computing device such as a smart phone (or tablet computer) - it could be a physical token such as a payment card or even a key fob.

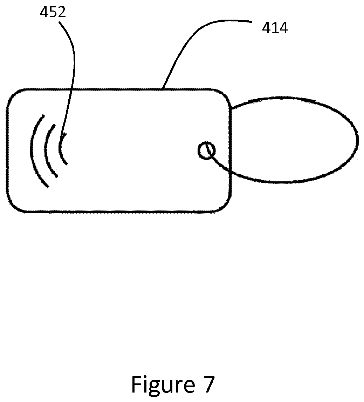

With reference to figures 4 and 5, one alternative payment device 14 is an electronic payment card 214. Again, the card 214 has a communication module 52 in the form of an NFC transceiver 252. The account data set and identifier are input as electronic data on the card 514. Alternatively the data may be stored as magnetic data on the magstripe. With reference to Figure 7, the electronic payment device 14 may be provided in the form of a key fob 414. Again, the account data set and identifier may be input as electronic data. The key fob 414 includes a NFC device 452. In this way, the key fob 414 has a communication module 52.

Providing the electronic payment device 14 in the form a payment card 214 or a key fob 414 may be particularly advantageous in certain situations, particularly for performing transactions with a particular retailer. Store cards - and proxies for store cards - may provide significant additional benefits for retailers and customers in that they allow the retailer to track customer behaviour, in return for which loyalty discounts and special offers are provided to the customer. It is desirable for the retailer to control issuance of these devices, as this makes it easier for the retailer to control secure interactions with the device (so that the retailer can confirm that the device is a valid registered device) and for the retailer to ensure that transactions between the customer and the retailer will be made with that payment device. It is difficult for a conventional payment device to act both as a store card and a contactless payment device, as this currently requires both issuer and retailer involvement in device set up.

In embodiments of the disclosure it may be desired to establish a store card as a contactless electronic payment device. The store may wish to link the store card to the user's account with an issuer directly without preloading the store card with credit or providing a special overdraft facility. In this way, the store can issue the store card to the user without having to request authentication from the account issuer thus saving time and maintaining flexibility and control.

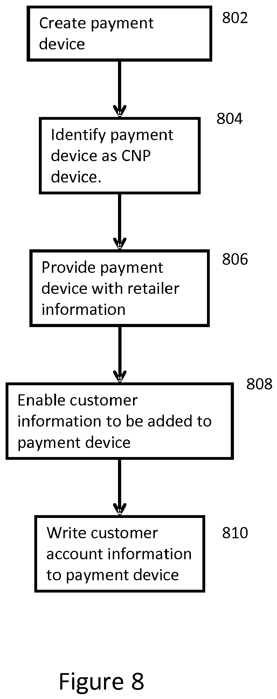

A process of setting up a payment device according to an embodiment of the disclosure will now be described with reference to Figure 8. First of all, the payment card (or other payment device) will be created and configured 802 to act as a payment device (this may require, for example, inclusion of a processing application allowing contactless transactions to be performed according to EMV protocols once account information is present). The appropriate step may be taken at this time to identify 804 the payment device as a CNP device. Retailer information may be added 806 to the card to allow it to serve as a loyalty card - this may simply involve an identifier recognised by the retailer (for example, a bar code that can be scanned by a retailer system) or may involve a separate contactless interaction between the payment device and a retailer system (for example to authenticate the customer to allow confidence that benefits are provided to the correct party). This may in principle take place on payment device creation (for example, in printing a bar code on to a payment card) or during or after its configuration as a payment device.

These steps are described above in the context of a physical device. However, they may also be employed in customisation of an application to be downloaded to a user device such as a smart phone such as in the Figure 3 embodiment.

An approach is then needed to enable 808 customer account information to be written to the payment device. Where the payment device is a smart phone equipped with a suitable payment application, this may simply be through use of the smart phone user interface to write data into fields of the payment application. In the case of a payment card, this may require customer account information to be written into the device using a system that is in contact with the processing environment on the card through a contact or contactless interface - this may be the retailer (who will then needed to be provided with user account information, for example by a dummy transaction with the customer's payment card to read account information into a retailer terminal) or it may be the customer if provided with an interface to do so (for example, an interface into the retailer system where the retailer has control of the card, or by means of an application on a user device or a website which the customer can access). The customer account information is then written 810 into the payment device - this account information is typically that available visibly on a payment card (account number, sort code, CVV code etc.) but does not include any cryptographic material used to establish a trust relationship between a payment device and the issuer.

Further embodiments of this disclosure may be provided by the person skilled in the art according to the spirit and scope of the claims without limitation to the embodiments described above.

## Claims

1. A method of performing a contactless transaction at an electronic payment device with a terminal of a transaction system, the method comprising:
preparing an account data set for use in contactless transactions, wherein the account data set comprises user account details to associate a user account with an issuer of the user account and an indicator indicating that the contactless transaction is a card not present (CNP) transaction;
performing the contactless transaction with the terminal using the contactless transaction account data set.

2. The method as claimed in claim 1, wherein the electronic payment device is adapted to perform a contactless transaction according to EMV protocols, and wherein the indicator is comprised in the application interchange profile.

3. The method as claimed in claim 1 or claim 2, wherein the contactless transaction account data set comprises one or more of the following: an account number, a card number, an expiry date, a valid from date, an issue number, a card type and a card verification value (CVV).

4. The method as claimed in any preceding claim, wherein the contactless transaction account data set excludes cryptographic information shared between the electronic payment device and the issuer to establish a trust relationship between them.

5. The method as claimed in any preceding claim wherein the electronic payment device is a computing device.

6. The method as claimed in any of claims 1 to 4 wherein the electronic payment device is a physical token.

7. The method as claimed in claim 6, wherein the physical token is a payment card.

8. The method of processing a contactless transaction made between an electronic payment device and a terminal of a transaction system, the method comprising:
receiving transaction details of a contactless transaction for processing;
reviewing the transaction details to determine whether the contactless transaction is indicated to be a card present or a card not present transaction; and
if the contactless transaction is indicated to be a card present transaction, notifying an issuing bank for the electronic payment device; and
if the contactless transaction is indicated to be a card not present transaction, processing the contactless transaction as a card not present transaction.

9. The method as claimed in claim 8, wherein the contactless transaction is performed according to EMV protocols, and wherein the indicator is comprised in the application interchange profile.

10. An electronic payment device adapted to perform a contactless transaction with a terminal of a transaction system using the method of any of claims 1 to 4, the electronic payment device comprising a memory containing the account data set and the indicator, and circuitry to establish a local wireless connection to a terminal of a transaction system.

11. The electronic payment device of claim 10 wherein the electronic payment device is a computing device.

12. The electronic payment device of claim 10 wherein the electronic payment device is a cellular telecommunications system handset.

13. The electronic payment device of claim 10 wherein the electronic payment device is a physical token.

14. The electronic payment device of claim 13, wherein the physical token is a payment card.

15. The electronic payment device of claim 13, wherein the physical token is a key fob.
